# EUROPEAN PATENT SPECIFICATION

(11) **EP 3 312 060 B1**
(45) Date of publication and mention of the grant of the patent: **03.04.2019**
(21) Application number: 16823903.6
(22) Date of filing: 15.07.2016
(51) Int. Cl.: B60R 25/24, B60R 25/20, B60R 25/04, B60R 16/02

(54) **VEHICLE START METHOD**
FAHRZEUGSTARTVERFAHREN
PROCÉDÉ DE DÉMARRAGE DE VÉHICULE

(30) Priority: 16.07.2015 CN 201510422328
(43) Date of publication of application: 25.04.2018
(73) Proprietor: Zhejiang Geely Automobile Research Institute Co., Ltd., Taizhou, Zhejiang 317000 (CN); Zhejiang Geely Holding Group Co., Ltd., Zhejiang 310051 (CN)
(72) Inventor: GUO, Zhilin, Taizhou Zhejiang 317000 (CN); CHEN, Wenqiang, Taizhou Zhejiang 317000 (CN); WU, Chengming, Taizhou Zhejiang 317000 (CN)
(74) Representative: Ziebig & Hengelhaupt Patentanwälte PartG mbB
(86) International application number: PCT/CN2016/090090
(87) International publication number: WO 2017/008756

(56) References cited:
- WO-A1-2014/125353
- WO-A1-2015/091951
- CN-A- 101 159 555
- CN-A- 103 010 154
- CN-A- 104 057 801
- CN-A- 104 742 863
- CN-A- 105 083 218
- CN-U- 203 840 417
- DE-A1-102012 107 000
- JP-A- 2012 101 709
- US-A1- 2014 172 192
- US-A1- 2014 277 837

## Description

### Technical Field

The present invention relates to the field of vehicle security, and in particular to a vehicle starting method.

### Background of the Invention

Traditionally, in remotely starting a vehicle, a smart keyless entry or a remote keyless entry (RKE) transmits a starting signal by having a portable transmitter that can transmit a radio signal (e.g., a radio frequency signal), and a receiver installed in the vehicle receives the radio signal. The receiver can transfer information with a device such as a door locking system or an engine driving system to start the vehicle. By means of the method of remote starting, a user can start the vehicle when being not within the vehicle, and the user can thus start the vehicle before actually using it. By remotely starting the vehicle, the vehicle may become warm or cool to get ready for use when needed and allow the cab to be pre-adjusted to a desired cab condition before a passenger actually enters the vehicle cab. Such a method of direct starting by use of a key is subject to a distance restriction that the vehicle can be started only when it is located within a controlled scope of the key.

In the prior art, remote starting of a vehicle is achieved by a mobile phone APP or a mobile device. For example, a starting instruction is transmitted to the vehicle by a mobile phone, and a data traffic card is installed on the vehicle for receiving the starting instruction and forwarding the starting instruction to a control part of the vehicle so as to achieve the purpose of vehicle starting. A drawback of such a technical solution is that since the mobile phone is used to transmit the starting instruction to the vehicle, if the mobile phone is lost or personal information data in the mobile phone terminal is cracked, a holder of the mobile phone or any mobile phone to which the stolen personal information data is migrated can start the vehicle.

DE 10 2012107 000 and US 2014/0277837 disclose a mobile device configured to receive vehicle key security codes from a vehicle key and to transmit commands to the vehicle for starting the vehicle using the security codes originating solely from the key.

### Summary of the Invention

An object of the present invention is to provide a vehicle starting method to improve vehicle security.

A further object of the present invention is to provide a technical solution for conveniently acquiring key information by a mobile terminal.

Another further object of the present invention is to remotely start a vehicle safely and without a distance restriction.

In particular, the present invention provides a vehicle starting method for starting a vehicle in a contactless manner with a mobile terminal and a keyless entry, wherein key information about the keyless entry that matches the vehicle is stored in the keyless entry, the starting method comprising:
the mobile terminal sending a starting request;
the mobile terminal acquiring a first security authentication code in response to the starting request;
the mobile terminal acquiring the key information from the keyless entry;
the mobile terminal generating a starting data stream in a predetermined manner according to the key information and the first security authentication code and sending the starting data stream to the vehicle;
the vehicle receiving the starting data stream from the mobile terminal and acquiring the first security authentication code and the key information from the starting data stream;
the vehicle verifying whether the first security authentication code is correct and determining whether the key information matches the vehicle; and
a vehicle controller starting the vehicle in the case that the first security authentication code is correct and the key information matches the vehicle,
wherein the vehicle receives the starting request and generates the first security authentication code in response to the starting request; or
wherein a remote server generates the first security authentication code and a second security authentication code that matches the first security authentication code, and sends the first security authentication code to the mobile terminal and the second security authentication code to the vehicle;
wherein a matching operation is performed on the first security authentication code and the second security authentication code to verify whether the first security authentication code is correct. And of course, the vehicle should satisfy other starting conditions in advance (e.g., battery level, engine state, etc.).

Further, the mobile terminal has first identity information for identifying the mobile terminal, the vehicle has second identity information for identifying the vehicle, and the first and second identity information are bound;
wherein the first identity information of the mobile terminal is contained in the starting request, and the starting request is sent to the vehicle having the second identity information bound to the first identity information, and the vehicle sends the first security authentication code to the mobile terminal having the first identity information.

Further, the mobile terminal has the first identity information for identifying the mobile terminal, the vehicle has the second identity information for identifying the vehicle, and the first and second identity information are bound at the remote server;
wherein the first identity information of the mobile terminal is contained in the starting request, and the remote server sends the first security authentication code to the mobile terminal having the first identity information and sends the second security authentication code to the vehicle having the second identity information bound to the first identity information.

Further, the first identity information is provided by a first subscriber identification module disposed at the mobile terminal for mobile communications, and the second identity information is provided by a second subscriber identification module disposed at the vehicle for mobile communications;
optionally, data is transmitted over a mobile communication network between the mobile terminal and the vehicle or among the mobile terminal, the vehicle and the remote server.

Further, the starting request is sent directly from the mobile terminal to the remote server, and upon receipt of the second security authentication code by the vehicle, at least a part of an on-board bus controller of the vehicle is awakened to prepare for starting the vehicle; alternatively,
the starting request is sent from the mobile terminal to the vehicle, and then forwarded to the remote server by the vehicle; and upon receipt of the starting request by the vehicle, at least a part of the on-board bus controller of the vehicle is awakened to prepare for starting the vehicle.

Further, the first and/or second security authentication code is set to have a valid time;
optionally, the starting data stream is generated by the mobile terminal only in the case that the first security authentication code is valid, and/or a determination is made by the vehicle as to whether the first security authentication code matches the second security authentication code only in the case that the second security authentication code is valid.

Further, the vehicle enters a sleep state in the case that the vehicle is not started within the valid time.

Further, the key information is acquired by the mobile terminal from the keyless entry by way of wireless communication, preferably near field communication.

According to the present invention, the vehicle can be started only in the case that the first security authentication code in the starting data stream sent by the mobile terminal is correct and the key information matches the vehicle. Since the mobile terminal needs to acquire the key information, that is, the mobile terminal needs to cooperate with the keyless entry to start the vehicle, the vehicle therefore cannot be started only by use of the mobile terminal of the user of the vehicle, which effectively prevents the vehicle being started only by use of the mobile terminal as a result of the mobile terminal being lost or the personal information data therein being stolen, thereby improving the security of the vehicle.

Further, in the present invention, the key information is acquired by the mobile terminal from the keyless entry by way of wireless communication, preferably near field communication, which is convenient and efficient.

Further, in the present invention, the mobile terminal needs to cooperate with the keyless entry to start the vehicle, and after acquiring the key information, the mobile terminal sends the starting data stream to the vehicle over the mobile communication network, thereby achieving the purpose of remotely starting the vehicle safely and without a distance restriction.

Further, upon receipt of the second security authentication code or the starting request by the vehicle, at least a part of the on-board bus controller of the vehicle is awakened to prepare for starting the vehicle. In this way, before the vehicle acquires the first security authentication code and the key information, the on-board bus controller has started a part of its components or functions to prepare for starting the vehicle, which greatly accelerates the starting process of the vehicle, and starting a part of the on-board bus controller can also provide support for verifying the first security authentication code and the key information.

According to the detailed description of the particular embodiments of the present invention below in conjunction with the accompanying drawings, the above-mentioned and other objects, advantages and features of the present invention will be clearer to a person skilled in the art.

### Brief Description of the Drawings

Some of the particular embodiments of the present invention will be described below in detail in an exemplary but not limiting way with reference to the accompanying drawings. The same reference signs in the figures indicate the same or similar components or parts. In the accompanying drawings:
Fig. 1 is a flow diagram of steps of a vehicle starting method according to one embodiment of the present invention;
Fig. 2 is a flow diagram of a method for starting a vehicle by means of cooperation among the vehicle, a mobile terminal and a keyless entry according to one embodiment of the present invention; and
Fig. 3 is a flow diagram of a method for starting a vehicle by means of cooperation among the vehicle, a remote server, a mobile terminal and a keyless entry according to another embodiment of the present invention.

### Detailed Description of the Invention

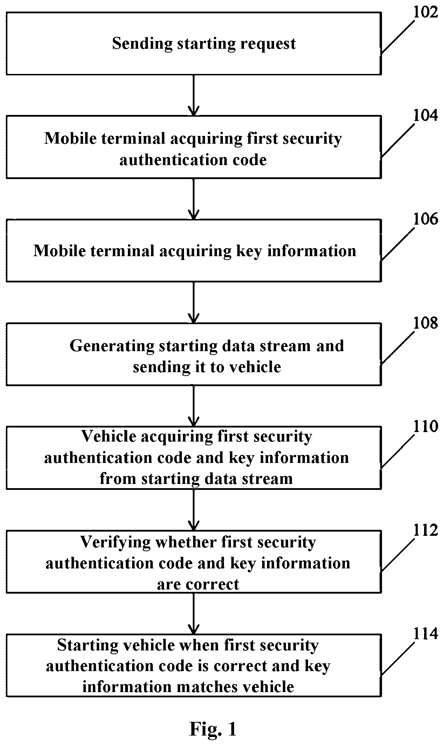

As shown in Fig. 1, the vehicle starting method is used for starting a vehicle 1 in a contactless manner with a mobile terminal 3 and a keyless entry 4. In the method, key information about the keyless entry 4 that matches the vehicle 1 is pre-stored in the keyless entry 4. The starting method may generally comprise:
In step 102, a starting request is sent. In the step, the starting request is issued by the mobile terminal 3, and the starting request may be generated and sent by the mobile terminal 3, or it may be generated by other devices and sent only by the mobile terminal 3. The mobile terminal 3 may be a mobile phone or other portable terminal devices, such as a wearable device.
In step 104, the mobile terminal 3 acquires a first security authentication code. In the step, the mobile terminal 3 acquires the first security authentication code in response to the starting request. The first security authentication code may be generated and transmitted to the mobile terminal 3 by the vehicle 1, or the first security authentication code is generated and transmitted to the mobile terminal 3 by a remote server 2.
In step 106, the mobile terminal 3 acquires the key information. In the step, the mobile terminal 3 acquires the key information from the keyless entry 4.
In step 108, a starting data stream is generated and sent to the vehicle 1. In the step, the mobile terminal 3 generates the starting data stream in a predetermined manner according to the key information and the first security authentication code and sends the starting data stream to the vehicle 1. That is, the key information and the first security authentication code are contained in the starting data stream received by the vehicle.
In step 110, the vehicle 1 acquires the first security authentication code and the key information from the starting data stream. In the step, the vehicle 1 receives the starting data stream from the mobile terminal 3 in advance, and analyses the starting data stream to obtain the first security authentication code and the key information contained therein.
In step 112, it is verified whether the first security authentication code and the key information are correct. In the step, the vehicle 1 verifies whether the first security authentication code is correct, and determines whether the key information matches the vehicle 1.
In step 114, the vehicle 1 is started when the first security authentication code is correct and the key information matches the vehicle 1. In the step, a vehicle controller can start the vehicle 1 only in the case that the first security authentication code is correct and the key information matches the vehicle 1.

According to the embodiment, the vehicle 1 can be started in the case that the first security authentication code in the starting data stream sent by the mobile terminal 3 is correct and the key information matches the vehicle 1. Since the mobile terminal 3 needs to acquire the key information about the keyless entry 4, that is, the mobile terminal 3 needs to cooperate with the keyless entry 4 to start the vehicle 1, the vehicle 1 therefore cannot be started only by use of the mobile terminal 3 of the user of the vehicle 1, which effectively prevents the vehicle 1 being started only by use of the mobile terminal 3 as a result of the mobile terminal 3 being lost or the personal information data therein being stolen, thereby improving the security of the vehicle 1.

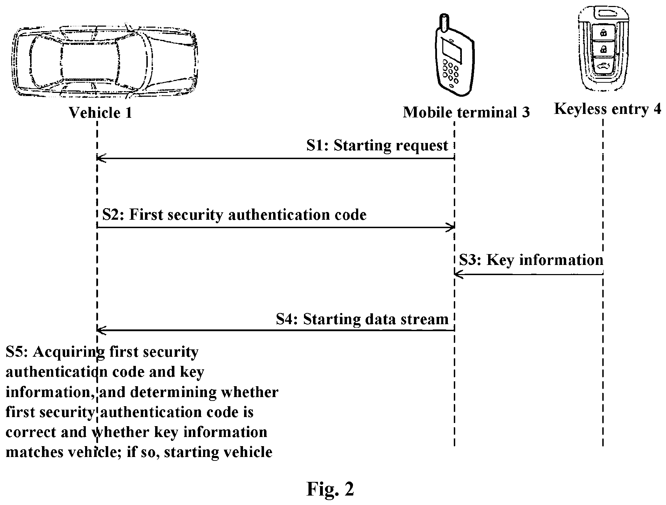

Fig. 2 is a flow diagram of a method for starting a vehicle by means of cooperation among the vehicle, a mobile terminal and a keyless entry according to one embodiment of the present invention. The starting method as shown in Fig. 2 comprises the following steps:
In step S1, the mobile terminal 3 sends a starting request to the vehicle 1.
In step S2, the vehicle 1 receives the starting request, and generates a first security authentication code in response to the starting request, and sends the first security authentication code to the mobile terminal 3.
In step S3: the mobile terminal 3 acquires key information from the keyless entry 4. For example, the key information may be an identification (ID) code of the keyless entry 4 which matches an ID code of the corresponding vehicle 1.
In step S4: the mobile terminal 3 generates a starting data stream in a predetermined manner according to the key information and the first security authentication code, and sends the starting data stream to the vehicle 1.
In step S5: the vehicle 1 receives the starting data stream from the mobile terminal 3, and analyses the starting data stream to obtain the first security authentication code and the key information contained therein. The vehicle 1 is started when the first security authentication code is correct and the key information matches the vehicle 1.

In step S1, in order to enable the starting request sent by the mobile terminal 3 to reach a specific vehicle (i.e., the vehicle 1), it is necessary to bind the mobile terminal 3 to the vehicle 1. In one embodiment of the present invention, the mobile terminal 3 has first identity information for identifying the mobile terminal 3, the vehicle 1 has second identity information for identifying the vehicle 1, and the first identity information and the second identity information are bound. In one embodiment, the first identity information is provided by a first subscriber identification module (SIM) disposed at the mobile terminal 3 for mobile communications, and the second identity information is provided by a second subscriber identification module disposed at the vehicle 1 for mobile communications. Here, the first and second subscriber identification modules may be an SIM card usually used for mobile communications. On the one hand, the SIM card can provide a unique mobile communication number that can be used for identity identification; on the other hand, by cooperating with a peripheral communication circuit, the SIM card can enable the mobile terminal 3 and the vehicle 1 to access a mobile communication network and transmit data therebetween over the mobile communication network. The first identity information of the mobile terminal 3 is contained in the starting request sent to the vehicle 1 by the mobile terminal 3, so other mobile terminals cannot start the vehicle 1 even in cooperation with the keyless entry 4, which further increases the security of the vehicle. In step S2, when the first identity information and the second identity information are bound, the process that the vehicle 1 sends the first security authentication code to the mobile terminal 3 may be as follows: the first identity information of the mobile terminal 3 is contained in the starting request which is sent to the vehicle 1 having the second identity information bound to the first identity information, and the vehicle 1 sends the first security authentication code to the mobile terminal 3 having the first identity information.

In step S3, the key information is acquired from the keyless entry 4 by the mobile terminal 3 by way of wireless communication, preferably near field communication (NFC). In the present invention, the keyless entry 4 and the mobile terminal 3 such as a mobile phone are each equipped with an NFC chip, and the key information is acquired by the mobile terminal 3 by means of the corresponding software or application within the mobile terminal 3 when the keyless entry 4 is brought into contact with the mobile terminal 3. With the NFC communication approach, the key information can be acquired by the mobile terminal 3 only in the case that the keyless entry 4 is close to the mobile terminal 3, which basically indicates that the keyless entry 4 and the mobile terminal 3 are held by the same person. Since it is less likely that both the keyless entry 4 and the mobile terminal 3 are lost at the same time, this usually indicates that the holder is the owner of the keyless entry 4 and the mobile terminal 3, which further improves the security.

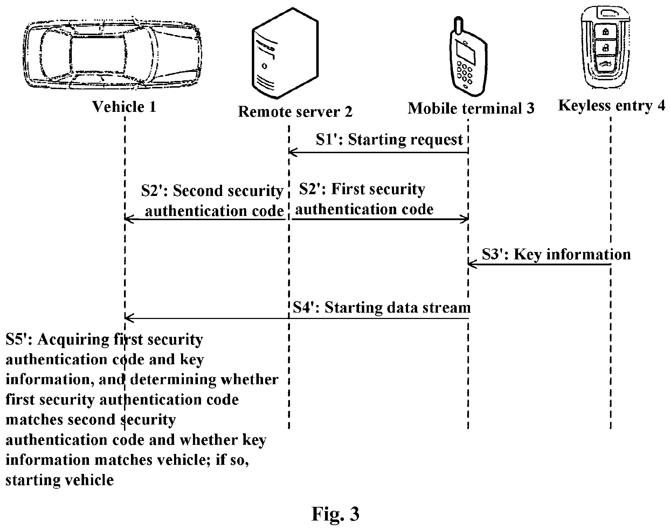

Fig. 3 is a flow diagram of a method for starting a vehicle by means of cooperation among the vehicle, a remote server, a mobile terminal and a keyless entry according to another embodiment of the present invention. The starting method as shown in Fig. 2 comprises the following steps:
In step S1', the mobile terminal 3 sends a starting request to the remote server 2.
In step S2', the remote server 2 receives the starting request, and generates a first security authentication code and a second security authentication code in response to the starting request, and sends the first security authentication code to the mobile terminal 3 and the second security authentication code to the vehicle 1.
In step S3': the mobile terminal 3 acquires key information from the keyless entry 4.
In step S4': the mobile terminal 3 generates a starting data stream in a predetermined manner according to the key information and the first security authentication code, and sends the starting data stream to the vehicle 1.
In step S5': the vehicle 1 receives the starting data stream from the mobile terminal 3 in advance, and analyses the starting data stream to obtain the first security authentication code and the key information contained therein. The vehicle is started when the first security authentication code matches the second security authentication code and the key information matches the vehicle.

When the remote server 2 exists, it is possible to choose to transfer the starting request sent by the mobile terminal 3 through the remote server 2, and in step S1', the mobile terminal 3 chooses to send the starting request to the remote server 2. Similarly, in order to enable the starting request sent by the mobile terminal 3 to reach a specific vehicle (i.e., the vehicle 1), it is necessary to bind the mobile terminal 3 to the vehicle 1. In one embodiment of the present invention, the mobile terminal 3 has first identity information for identifying the mobile terminal 3, the vehicle 1 has second identity information for identifying the vehicle 1, and the first identity information and second identity information are bound at the remote server 2. For example, the first identity information is provided by a first subscriber identification module disposed at the mobile terminal 3 for mobile communications, the second identity information is provided by a second subscriber identification module disposed at the vehicle 1 for mobile communications, and data is transmitted over a mobile communication network among the mobile terminal 3, the vehicle 1 and the remote server 2. The first identity information of the mobile terminal 3 is contained in the starting request sent to the remote server 2 by the mobile terminal 3, and in step S2', the remote server 2 sends the first security authentication code to the mobile terminal 3 having the first identity information and sends the second security authentication code to the vehicle 1 having the second identity information bound to the first identity information. In step S3, the key information is acquired from the keyless entry 4 by the mobile terminal 3 by way of wireless communication, preferably near field communication (NFC).

As mentioned above, the vehicle is started when the first security authentication code matches the second security authentication code and the key information matches the vehicle. In order to accelerate the starting of the vehicle, a part of the functions of the vehicle can be pre-started. For example, in the case that the starting request is sent from the mobile terminal 3 to the remote server 2, upon receipt of the second security authentication code by the vehicle 1, a part or all of the functions of an on-board bus controller of the vehicle 1 are awakened to prepare for starting the vehicle 1. However, in the case that the starting request is sent from the mobile terminal 3 to the vehicle 1 and is then forwarded to the remote server 2 by the vehicle 1, upon receipt of the starting request by the vehicle 1, a part or all of the functions of the on-board bus controller of the vehicle 1 are awakened to prepare for starting the vehicle 1. In this way, before the vehicle 1 acquires the first security authentication code and the key information, the on-board bus controller has started a part of the components or functions to prepare for starting the vehicle 1, which greatly accelerates the starting process of the vehicle 1, and starting a part of the on-board bus controller can also provide support for verifying the first security authentication code and the key information.

In order to further enhance the security of the vehicle, a valid time (for example, 10 minutes) can be set for the first and second security authentication codes, and both the first security authentication code and the second security authentication code cannot be identified after the expiration of the valid time, that is, the vehicle verifies the first security authentication code to be incorrect, and the first security authentication code is verified to be incorrect by performing a matching operation on the first security authentication code and the second security authentication code. Preferably, the determination as to whether the first security authentication code is valid is advanced to the starting data stream generation phase, that is, the mobile terminal 3 generates the starting data stream only in the case that the first security authentication code is valid; and the determination as to whether the second security authentication code is valid is advanced to the matching operation phase, that is, the vehicle 1 determines whether the first security authentication code matches the second security authentication code only in the case that the second security authentication code is valid. By setting the valid time for the first and second security authentication codes, such that the vehicle 1 cannot be started when one of the first and second security authentication codes exceeds the valid time, which prevents the situation in which invalid first authentication code and second security authentication code are used to steal the vehicle.

As mentioned above, a part or all of the functions of the on-board bus controller are awakened to prepare for starting the vehicle 1, and if the vehicle 1 is not started within the valid time, the vehicle 1 enters a sleep state, that is, the awakened part of the on-board bus controller sleeps again.

In conclusion, the invention has the following advantages:
1. With the vehicle starting method of the present invention, while the integrity and security of existing anti-theft systems are ensured, remote starting of a vehicle is not subject to any distance restriction.
2. The invention not only eliminates the distance restriction of traditional radio frequency communication by use of the NFC technology and the mobile communication technology, but also ensures the security level of traditional anti-theft systems, that is, the vehicle can be started only by use of a keyless entry. However, in the prior art, matching is not performed with the original keyless entry during the remote starting of a vehicle, and the prior art achieves the purpose of starting the vehicle by reducing the level of the vehicle security.
3. By way of a security verification code and a matching operation, the information security of the starting data stream of the vehicle is ensured.

## Claims

1. A vehicle (1) starting method for starting a vehicle (1) in a contactless manner with a mobile terminal (3) and a keyless entry (4), wherein key information about the keyless entry (4) that matches the vehicle (1) is stored in the keyless entry (4), the starting method comprising:
the mobile terminal (3) sending a starting request;
the mobile terminal (3) acquiring a first security authentication code in response to the starting request;
the mobile terminal (3) acquiring the key information from the keyless entry (4);
the mobile terminal (3) generating a starting data stream in a predetermined manner according to the key information and the first security authentication code and sending the starting data stream to the vehicle (1);
the vehicle (1) receiving the starting data stream from the mobile terminal (3) and acquiring the first security authentication code and the key information from the starting data stream;
the vehicle (1) verifying whether the first security authentication code is correct and determining whether the key information matches the vehicle (1); and
a vehicle (1) controller starting the vehicle (1) in the case that the first security authentication code is correct and the key information matches the vehicle (1); wherein the vehicle (1) receives the starting request and generates the first security authentication code in response to the starting request; or
wherein a remote server (2) generates the first security authentication code and a second security authentication code that matches the first security authentication code, and sends the first security authentication code to the mobile terminal (3) and the second security authentication code to the vehicle (1) and wherein a matching operation is performed on the first security authentication code and the second security authentication code to verify whether the first security authentication code is correct.

2. The method according to claim 1, wherein the mobile terminal (3) has first identity information for identifying the mobile terminal (3), the vehicle (1) has second identity information for identifying the vehicle (1), and the first and second identity information are bound;
wherein the first identity information of the mobile terminal (3) is contained in the starting request, and the starting request is sent to the vehicle (1) having the second identity information bound to the first identity information, and the vehicle (1) sends the first security authentication code to the mobile terminal (3) having the first identity information.

3. The method according to claim 1, wherein the mobile terminal (3) has the first identity information for identifying the mobile terminal (3), the vehicle (1) has the second identity information for identifying the vehicle (1), and the first and second identity information are bound at the remote server (2);
wherein the first identity information of the mobile terminal (3) is contained in the starting request, and the remote server (2) sends the first security authentication code to the mobile terminal (3) having the first identity information and sends the second security authentication code to the vehicle (1) having the second identity information bound to the first identity information.

4. The method according to one of claims 1 to 3, wherein the first identity information is provided by a first subscriber identification module disposed at the mobile terminal (3) for mobile communications, and the second identity information is provided by a second subscriber identification module disposed at the vehicle (1) for mobile communications;
optionally, data is transmitted over a mobile communication network between the mobile terminal (3) and the vehicle (1) or among the mobile terminal (3), the vehicle (1) and the remote server (2).

5. The method according to any one of claims 1 to 4, wherein the starting request is sent directly from the mobile terminal (3) to the remote server (2), and upon receipt of the second security authentication code by the vehicle (1), at least a part of an on-board bus controller of the vehicle (1) is awakened to prepare for starting the vehicle (1); alternatively,
the starting request is sent from the mobile terminal (3) to the vehicle (1), and then forwarded to the remote server (2) by the vehicle (1); and upon receipt of the starting request by the vehicle (1), at least a part of the on-board bus controller of the vehicle (1) is awakened to prepare for starting the vehicle (1).

6. The method according to any one of claims 1 to 5, wherein the first and/or second security authentication code is set to have a valid time;
optionally, the starting data stream is generated by the mobile terminal (3) only in the case that the first security authentication code is valid, and/or a determination is made by the vehicle (1) as to whether the first security authentication code matches the second security authentication code only in the case that the second security authentication code is valid.

7. The method according to claim 6, wherein the vehicle (1) enters a sleep state in the case that the vehicle (1) is not started within the valid time.

8. The method according to any one of claims 1-7, wherein the key information is acquired by the mobile terminal (3) from the keyless entry (4) by way of wireless communication, preferably near field communication.

## Patentansprüche

1. Verfahren zum Starten eines Fahrzeugs (1) zum Starten eines Fahrzeugs (1) auf kontaktlose Weise mit einem mobilen Endgerät (3) und einem schlüssellosen Zugang (4), wobei Schlüsselinformationen über den zu dem Fahrzeug (1) passenden schlüssellosen Zugang (4) in dem schlüssellosen Zugang (4) gespeichert sind, wobei das Startverfahren Folgendes umfasst:
Senden, durch das mobile Endgerät (3), einer Startanforderung;
Gewinnen, durch das mobile Endgerät (3), eines ersten Sicherheitsauthentifizierungscodes als Antwort auf die Startanforderung;
Gewinnen, durch das mobile Endgerät (3), der Schlüsselinformationen aus dem schlüssellosen Zugang (4);
Erzeugen, durch das mobile Endgerät (3), eines Startdatenstroms auf eine vorgegebene Weise in Übereinstimmung mit den Schlüsselinformationen und dem ersten Sicherheitsauthentifizierungscode und Senden des Startdatenstroms an das Fahrzeug (1);
Empfangen, durch das Fahrzeug (1), des Startdatenstroms von dem mobilen Endgerät (3) und Gewinnen des ersten Sicherheitsauthentifizierungscodes und der Schlüsselinformationen aus dem Startdatenstrom;
Verifizieren, durch das Fahrzeug (1), ob der erste Sicherheitsauthentifizierungscode korrekt ist, und Bestimmen, ob die Schlüsselinformationen zu dem Fahrzeug (1) passen; und
Starten des Fahrzeugs (1), durch eine Steuerung eines Fahrzeugs (1), falls der erste Sicherheitsauthentifizierungscode korrekt ist und die Schlüsselinformationen zu dem Fahrzeug (1) passen; wobei das Fahrzeug (1) die Startanforderung empfängt und den ersten Sicherheitsauthentifizierungscode als Antwort auf die Startanforderung erzeugt; oder
wobei ein Fernserver (2) den ersten Sicherheitsauthentifizierungscode und einen zweiten, zu dem ersten Sicherheitsauthentifizierungscode passenden, Sicherheitsauthentifizierungscode erzeugt und den ersten Sicherheitsauthentifizierungscode an das mobile Endgerät (3) und den zweiten Sicherheitsauthentifizierungscode an das Fahrzeug (1) sendet, und wobei eine Abgleichoperation auf den ersten Sicherheitsauthentifizierungscode und den zweiten Sicherheitsauthentifizierungscode angewendet wird, um zu verifizieren, ob der erste Sicherheitsauthentifizierungscode korrekt ist.

2. Verfahren nach Anspruch 1, wobei das mobile Endgerät (3) über erste Identitätsinformationen zum Identifizieren des mobilen Endgeräts (3) verfügt, das Fahrzeug (1) über zweite Identitätsinformationen zum Identifizieren des Fahrzeugs (1) verfügt und die ersten und zweiten Identitätsinformationen aneinander gebunden sind;
wobei die ersten Identitätsinformationen des mobilen Endgeräts (3) in der Startanforderung enthalten sind und die Startanforderung an das Fahrzeug (1), das über die an die ersten Identitätsinformationen gebundenen zweiten Identitätsinformationen verfügt, gesendet wird, und das Fahrzeug (1) den ersten Sicherheitsauthentifizierungscode an das mobile Endgerät (3) sendet, das über die ersten Identitätsinformationen verfügt.

3. Verfahren nach Anspruch 1, wobei das mobile Endgerät (3) über die ersten Identitätsinformationen zum Identifizieren des mobilen Endgeräts (3) verfügt, das Fahrzeug (1) über die zweiten Identitätsinformationen zum Identifizieren des Fahrzeugs (1) verfügt und die ersten und zweiten Identitätsinformationen auf dem Fernserver (2) aneinander gebunden sind;
wobei die ersten Identitätsinformationen des mobilen Endgeräts (3) in der Startanforderung enthalten sind und der Fernserver (2) den ersten Sicherheitsauthentifizierungscode an das mobile Endgerät (3) sendet, das über die ersten Identitätsinformationen verfügt, und den zweiten Sicherheitsauthentifizierungscode an das Fahrzeug (1) sendet, das über die an die ersten Identitätsinformationen gebundenen zweiten Identitätsinformationen verfügt.

4. Verfahren nach einem der Ansprüche 1 bis 3, wobei die ersten Identitätsinformationen durch ein erstes Teilnehmeridentifizierungsmodul bereitgestellt werden, das bei dem mobilen Endgerät (3) für mobile Kommunikation angeordnet ist, und die zweiten Identitätsinformationen durch ein zweites Teilnehmeridentifizierungsmodul bereitgestellt werden, das bei dem Fahrzeug (1) für mobile Kommunikation angeordnet ist;
optional Daten zwischen dem mobilen Endgerät (3) und dem Fahrzeug (1) oder unter dem mobilen Endgerät (3), dem Fahrzeug (1) und dem Fernserver (2) über ein mobiles Kommunikationsnetzwerk gesendet werden.

5. Verfahren nach einem der Ansprüche 1 bis 4, wobei die Startanforderung direkt von dem mobilen Endgerät (3) an den Fernserver (2) gesendet wird und nach Empfang des zweiten Sicherheitsauthentifizierungscodes durch das Fahrzeug (1) zumindest ein Teil einer bordeigenen Bus-Steuerung des Fahrzeugs (1) aus dem Ruhezustand erwacht, um sich auf den Start des Fahrzeugs (1) vorzubereiten; alternativ,
die Startanforderung von dem mobilen Endgerät (3) an das Fahrzeug (1) gesendet und dann durch das Fahrzeug (1) an den Fernserver (2) weitergeleitet wird; und nach Empfang der Startanforderung durch das Fahrzeug (1) zumindest ein Teil der bordeigenen Bus-Steuerung des Fahrzeugs (1) aus dem Ruhezustand erwacht, um sich auf den Start des Fahrzeugs (1) vorzubereiten.

6. Verfahren nach einem der Ansprüche 1 bis 5, wobei der erste und/oder zweite Sicherheitsauthentifizierungscode eine Gültigkeitszeit aufweist;
optional der Startdatenstrom durch das mobile Endgerät (3) nur dann erzeugt wird, wenn der erste Sicherheitsauthentifizierungscode gültig ist, und/oder eine Bestimmung, ob der erste Sicherheitsauthentifizierungscode zum zweiten Sicherheitsauthentifizierungscode passt, nur dann durch das Fahrzeug (1) vorgenommen wird, wenn der zweite Sicherheitsauthentifizierungscode gültig ist.

7. Verfahren nach Anspruch 6, wobei das Fahrzeug (1) in einen Ruhezustand eintritt, wenn das Fahrzeug (1) nicht innerhalb der Gültigkeitszeit gestartet wird.

8. Verfahren nach einem der Ansprüche 1-7, wobei die Schlüsselinformationen aus dem schlüssellosen Zugang (4) durch das mobile Endgerät (3) über drahtlose Kommunikation, vorzugsweise über Nahbereichskommunikation, gewonnen werden.

## Revendications

1. Procédé de démarrage de véhicule (1) pour démarrer un véhicule (1) sans contact avec un terminal mobile (3) et une entrée sans clé (4), les informations de clé relatives à l'entrée sans clé (4) correspondant au véhicule (1) étant stockées dans l'entrée sans clé (4),
le procédé de démarrage comprenant :
l'envoi, par le terminal mobile (3), d'une requête de démarrage ;
l'acquisition, par le terminal mobile (3), d'un premier code d'authentification de sécurité en réponse à la requête de démarrage :
l'acquisition, par le terminal mobile (3), des informations de clé de l'entrée sans clé (4) ;
la génération d'un flux de données de démarrage d'une manière prédéterminée conformément aux informations de clé et au premier code d'authentification de sécurité et l'envoi du flux de données de démarrage au véhicule (1), par le terminal mobile (3) ;
la réception du flux de données de démarrage du terminal mobile (3) et l'acquisition du premier code d'authentification de sécurité et des informations de clé du flux de données de démarrage, par le véhicule (1) ;
la vérification de la justesse du premier code d'authentification de sécurité et la détermination du fait de savoir si les informations de clé correspondent au véhicule (1), par le véhicule (1) ; et
le démarrage du véhicule (1) si le premier code d'authentification de sécurité est correct et si les informations de clé correspondent au véhicule (1), par un contrôleur de véhicule (1) ; le véhicule (1) recevant la requête de démarrage et générant le premier code d'authentification de sécurité en réponse à la requête de démarrage ; ou
un serveur à distance (2) générant le premier code d'authentification de sécurité et un deuxième code d'authentification de sécurité correspondant au premier code d'authentification de sécurité, et envoyant le premier code d'authentification de sécurité au terminal mobile (3) et le deuxième code d'authentification de sécurité au véhicule (1), et une opération de concordance étant effectuée sur le premier code d'authentification de sécurité et sur le deuxième code d'authentification de sécurité pour vérifier si le premier code d'authentification de sécurité est correct.

2. Procédé selon la revendication 1, le terminal mobile (3) ayant des premières informations d'identité pour identifier le terminal mobile (3), le véhicule (1) ayant des deuxièmes informations d'identité pour identifier le véhicule (1), et les premières et deuxièmes informations d'identité étant liées ;
les premières informations d'identité du terminal mobile (3) étant contenues dans la requête de démarrage, et la requête de démarrage étant envoyée au véhicule (1) ayant les deuxièmes informations d'identité liées aux premières informations d'identité, et le véhicule (1) envoyant le premier code d'authentification de sécurité au terminal mobile (3) ayant les premières informations d'identité.

3. Procédé selon la revendication 1, le terminal mobile (3) ayant des premières informations d'identité pour identifier le terminal mobile (3), le véhicule (1) ayant des deuxièmes informations d'identité pour identifier le véhicule (1), et les premières et deuxièmes informations d'identité étant liées au serveur à distance (2) ;
les premières informations d'identité du terminal mobile (3) étant contenues dans la requête de démarrage, et le serveur à distance (2) envoyant le premier code d'authentification de sécurité au terminal mobile (3) ayant les premières informations d'identité, et envoyant le deuxième code d'authentification de sécurité au véhicule (1) ayant les deuxièmes informations d'identité liées aux premières informations d'identité.

4. Procédé selon l'une des revendications 1 à 3, les premières informations d'identité étant fournies par un premier module d'identification d'abonné disposé sur le terminal mobile (3) pour communications mobiles, et les deuxièmes informations d'identité étant fournies par un deuxième module d'identification d'abonné disposé sur le véhicule (1) pour communications mobiles ;
des données étant transmises facultativement par un réseau de communication mobile entre le terminal mobile (3) et le véhicule (1) ou entre le terminal mobile (3), le véhicule (1) et le serveur à distance (2).

5. Procédé selon l'une quelconque des revendications 1 à 4, la requête de démarrage étant envoyée directement du terminal mobile (3) au serveur à distance (2), et au moins une partie d'un contrôleur de bus embarqué du véhicule (1) étant activée pour préparer le démarrage du véhicule (1), après réception du deuxième code d'authentification de sécurité par le véhicule (1) ; alternativement,
la requête de démarrage est envoyée du terminal mobile (3) au véhicule (1), puis transmise au serveur à distance (2) par le véhicule (1) ; et au moins une partie du contrôleur de bus embarqué du véhicule (1) étant activée pour préparer le démarrage du véhicule (1), après réception de la requête de démarrage par le véhicule (1).

6. Procédé selon l'une quelconque des revendications 1 à 5, les premier et/ou deuxième codes d'authentification de sécurité étant réglés pour avoir un intervalle de validité ;
facultativement, le flux de données de démarrage étant généré par le terminal mobile (3) uniquement si le premier code d'authentification de sécurité est valide, et/ou une détermination étant effectuée par le véhicule (1) relativement au fait de savoir si le premier code d'authentification de sécurité correspond au deuxième code d'authentification de sécurité uniquement si le deuxième code d'authentification de sécurité est valide.

7. Procédé selon la revendication 6, le véhicule (1) passant en mode veille si le véhicule (1) n'est pas démarré dans l'intervalle de validité.

8. Procédé selon l'une quelconque des revendications 1-7, les informations de clé étant obtenues de l'entrée sans clé (4) par le terminal mobile (3) au moyen d'une communication sans fil, de préférence d'une communication en champ proche.
